Europäisches Patentamt

European Patent Office

Office européen des brevets

(19)

(11) EP 1 464 218 A1

(12) **EUROPEAN PATENT APPLICATION**

(43) Date of publication:
06.10.2004 Bulletin 2004/41

(51) Int Cl.⁷: **A01G 9/18**, A01G 9/24

(21) Application number: 04076032.4

(22) Date of filing: 31.03.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **31.03.2003 NL 1023053**

(71) Applicant: **Praktijkonderzoek Plant en Omgeving
B.V.
6708 PD Wageningen (NL)**

(72) Inventor: **De Gelder, Arie
2742 DS Waddinxveen (NL)**

(74) Representative:
**Winckels, Johannes Hubertus F. et al
Vereenigde
Nieuwe Parklaan 97
2587 BN Den Haag (NL)**

(54) **Method and greenhouse for growing crop**

(57) The invention relates to method for growing crop (4), wherein the crop (4) is arranged in a greenhouse (1) closed off from the environment and wherein, inside the greenhouse (1), the climate is regulated and the watering for the crop (4) is controlled by a watering device (15), and wherein at least photosynthesis and/or yield of the crop (4) is regulated by controlling, independently of the outside conditions around the greenhouse (1):

- the $CO_2$ concentration in the air in the greenhouse (1); and/or
- controlling the transpiration of the crop (4) by at least regulation of the air temperature and/or air movements around the crop (4).

Fig. 1

## Description

The invention relates to a method and device for growing crop.

When crop is grown in greenhouses, the air temperature in the greenhouse is usually regulated by opening or closing ventilation windows and by wholly or partly blinding windows of the greenhouse for at least a part of the year. Here, $CO_2$ supply and discharge in the greenhouse, and, accordingly, the $CO_2$ concentration in the greenhouse, depends on the photosynthesis of the crop on the one hand and, for instance, the amount and composition of ventilated air on the other hand. The photosynthesis depends on many factors which are not or only difficultly controllable in an "open" greenhouse.

WO 00/76296 describes a "closed" greenhouse. This is a greenhouse in which there is no ventilation by means of windows or doors. The only direct influence of the environment of the greenhouse is solar radiation, that is, the energy thus added to the greenhouse in the form of heat radiation. In this known "closed" greenhouse, air is introduced under the crop by means of air hoses with air inlet openings which are located low in the greenhouse, air is exhausted high in the greenhouse and is brought to the low hoses back into the greenhouse by means of a heat exchanger. This known "closed" greenhouse is designed to create and/or maintain a desired air temperature in the greenhouse by means of a minimum of energy. Here, the amount of recirculated air and the temperature thereof are regulated.

The present invention contemplates providing a method for growing crop in a closed greenhouse such as for instance described in WO 00/76296, inserted herein by reference.

The invention particularly contemplates such a method by means of which at least the photosynthesis of the crop can be measured, at least determined and/or controlled.

In addition, the invention contemplates such a method in which the crop yield can be controlled, in particular by control of the photosynthesis of the crop.

The invention further contemplates such a method in which microclimate can be regulated near leaves of the crop.

The invention further contemplates such a method by means of which the yield of the crop, at least crop growth can be controlled in time.

At least a number of these objects are achieved with a method according to the invention.

In a method according to the invention, in a surprising manner, use is made of the fact that the greenhouse is closed and that hence virtually no other exchange with the environment takes place but solar heat. The inventors have had the insight that, as a result of the virtual air tightness of the greenhouse, the $CO_2$ leakage can simply be determined. Because of this, when measuring the $CO_2$ concentration in the greenhouse and a known supply of $CO_2$ in the greenhouse, it can be calculated how much $CO_2$ has been taken up by the crop, from which the photosynthesis can be calculated. The $CO_2$ uptake by the crop for optimal photosynthesis can simply be calculated or estimated on the basis of known models, such as for instance described in Heuvelink, E. 1996: Tomato growth and yield quantitative analysis and synthesis, Thesis Wageningen. By comparing the actual $CO_2$ uptake by the crop and the $CO_2$ leakage on the one hand and the calculated, at least estimated $CO_2$ uptake of the crop for optimal photosynthesis and the $CO_2$ concentration in the greenhouse on the other hand, it can be determined how much $CO_2$ needs to be dosed, so that the photosynthesis can be optimized. Hence, in this manner, by adjusting the $CO_2$ dose, also, the photosynthesis and, accordingly, the crop development can be controlled.

From the $CO_2$ dose, the $CO_2$ leakage and the $CO_2$ concentration in the greenhouse, it can be determined what the $CO_2$ uptake is by the crop. If this differs from the calculated, at least estimated $CO_2$ uptake for optimal photosynthesis, it can be determined that the crop quality is suboptimal, for instance as a result of less supply of nutrients and/or damage due to disease. In this manner, for the grower, an instrument has been obtained to monitor the health and/or quality of his crop.

On the basis of the same insight, inside the greenhouse, the photosynthesis can be influenced by control of the transpiration of the crop. The transpiration of the crop has surprisingly been found to be regulable by control of the air temperature and/or the air movements near the crop, in particular near its leaves. In this manner, the crop growth can be controlled and/or monitored.

It has been found that the microclimate near the crop, in particular at the height of leaves of the crop, can be regulated by means of at least air movements and/or air temperature around the crop. As a result, for instance, the transpiration of the crop can be controlled and, in addition, the climate for insects can be controlled. In this manner, for instance, an unfavorable microclimate for insect pests can be obtained or, conversely, a favorable microclimate for beneficial insects. Also, by independent regulation of the air humidity and the air temperature and the crop temperature, fungous diseases can be prevented. Consequently, the use of harmful plant protection products can be considerably reduced or even be dispensed with.

In a method according to the invention, in the greenhouse, the temperature of the air can be regulated on the basis of the crop temperature or the temperature of the crop by regulation of the air temperature. Preferably, the air temperature in the greenhouse is only slowly raised or, in particular, lowered. This prevents damages to the crop, in particular to leaf edges. By lowering the air temperature in the greenhouse and of the crop, the development is slowed down, so that the growth of the crop can be inhibited. Consequently, with a method according to the invention, the possibility is offered to control the yield of the crop through the year, for instance depending on the demand for the crop. In addition, the closed greenhouse offers the advantage that, also in periods of relatively high radiation by solar heat, the air temperature in the greenhouse and, accordingly, the crop temperature is regulable at a relatively low temperature, and, in addition, in an energetically advantageous manner. Consequently, also in, for instance, (late) spring and in summer, the development is well regulable.

A further advantage is that, with a method according to the invention, it can be achieved that the quality of the crop can be improved therewith and, in particular, can be brought to and maintained at a relatively high and constant level through the whole year. It has been found that, for, for instance, tomatoes, the taste and the moisture content can be maintained relatively constant through the year or can even be improved towards fall, while, with conventional methods, conversely, the quality decreases towards the fall.

In a method according to the invention, it is preferred to use a regulating device with an algorithm by which, on the basis of measurement data such as $CO_2$ concentration, radiation of solar heat, air temperature, air movements and/or air humidity, the watering, $CO_2$ supply, the air supply and/or the air temperature can automatically be regulated or indicators can be offered to the manager of the greenhouse for manually adjusting one or more of these parameters.

The invention further relates to a greenhouse for growing crop, characterized by the measures according to claim 16.

In such a greenhouse, crop can be grown in an energetically advantageous manner, in which the photosynthesis of the crop can accurately be regulated and/or monitored, by means of which, for instance, the quality of the crop and the yield thereof can be regulated. In addition, in such a greenhouse, the crop can be protected against insect pests and fungi in a particularly advantageous manner.

A greenhouse according to the invention is preferably basically built up as described in WO 00/76296, to which at least one regulating device for regulating the $CO_2$ concentration and the air temperature and/or air movements in the greenhouse around the crop is provided. Here, preferably, air regulating means such as partitions, screens and the like, outlet openings for air at different heights near the crop and the like are provided so that, near the crop, the climate, in particular the microclimate near the leaves of the crop, can be regulated and/or monitored.

Preferably, further a watering device is provided as described in the non-prior published Dutch patent application 1021856. By this, the increase in weight of the crop can accurately be measured and controlled, while, in addition, the watering can accurately be monitored and controlled. In addition, it provides the possibility to recirculate water in an advantageous manner so that virtually no water and nutrients need to be lost.

Air is preferably recirculated within the greenhouse via heat exchangers so that heating and/or cooling of the air can be ensured in an energetically advantageous manner. In addition, preferably, means are provided for controlling the air humidity of the recirculated air, at least of the air in the greenhouse, independent of the air temperature.

Further advantageous methods and greenhouses according to the invention are described in the further subclaims. In order to explain the invention, embodiments of a method and greenhouse according to the invention will be further elucidated with reference to the drawing, in which:

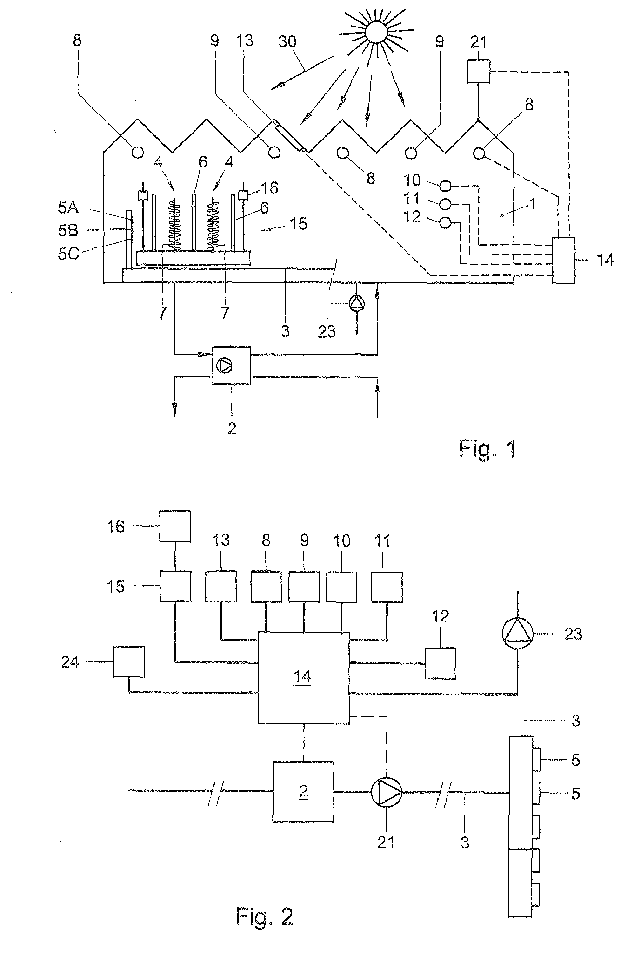

Fig. 1 diagrammatically shows a greenhouse according to the invention with a diagram for regulation of the growing of crop therein;
Fig. 2 shows a regulation diagram for use with a method according to the invention;
Fig. 3 diagrammatically shows a part of a greenhouse according to the invention;

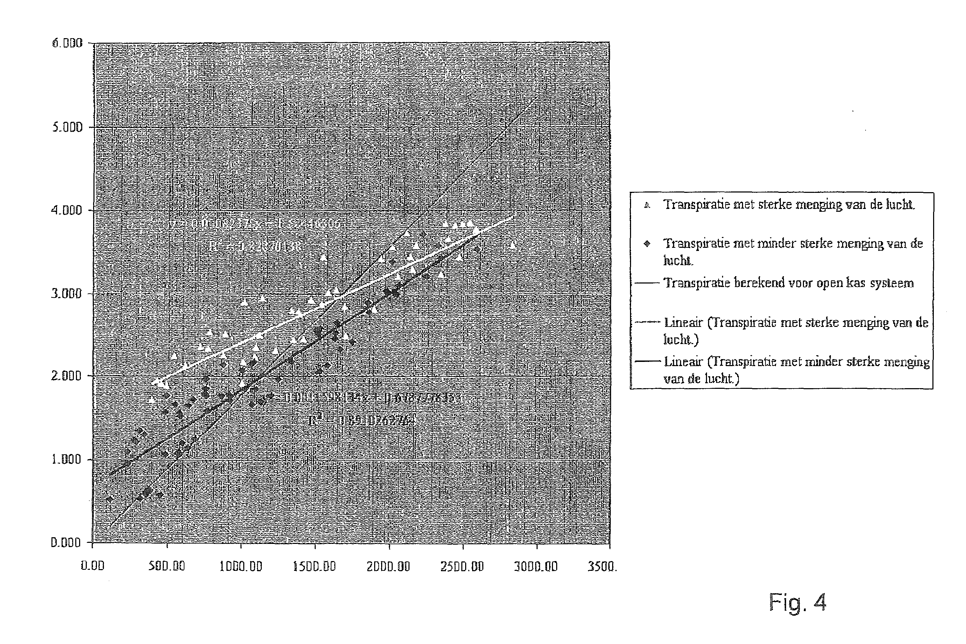

Fig. 4 shows a graph in which the transpiration of crop is plotted against the sum of the solar radiation incident on the greenhouse in a day, depending on different air movements and compared to a known open greenhouse, for a known open greenhouse, for a greenhouse according to the invention with strong mixing of the air and with little mixing of the air in the greenhouse; and

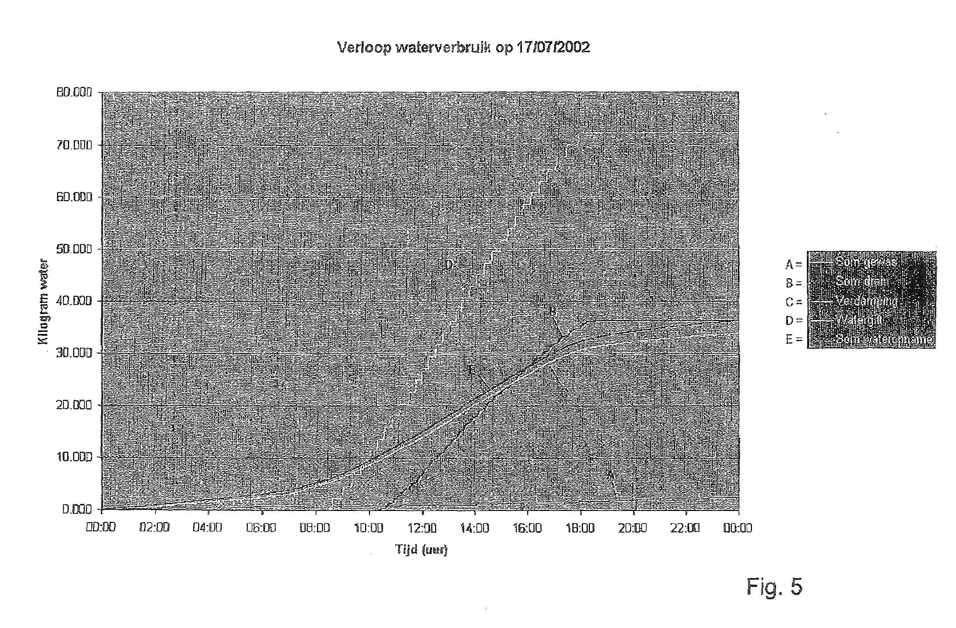

Fig. 5 shows a graph in which the water consumption is plotted against the hours of a day.

In this description, same or corresponding parts have same or corresponding reference numerals.

For the general construction of a closed greenhouse, as an example, WO 00/79296 is referred to, which is inserted herein by reference. In this application, a closed greenhouse is at least understood to mean a greenhouse in which, besides solar heat radiating into the greenhouse, there is no direct exchange with the (external) environment of the greenhouse. Thus, all air flowing into and out of the greenhouse will be led via heat exchangers and, optionally, filters, so that the temperature of the air in the greenhouse is regulable.

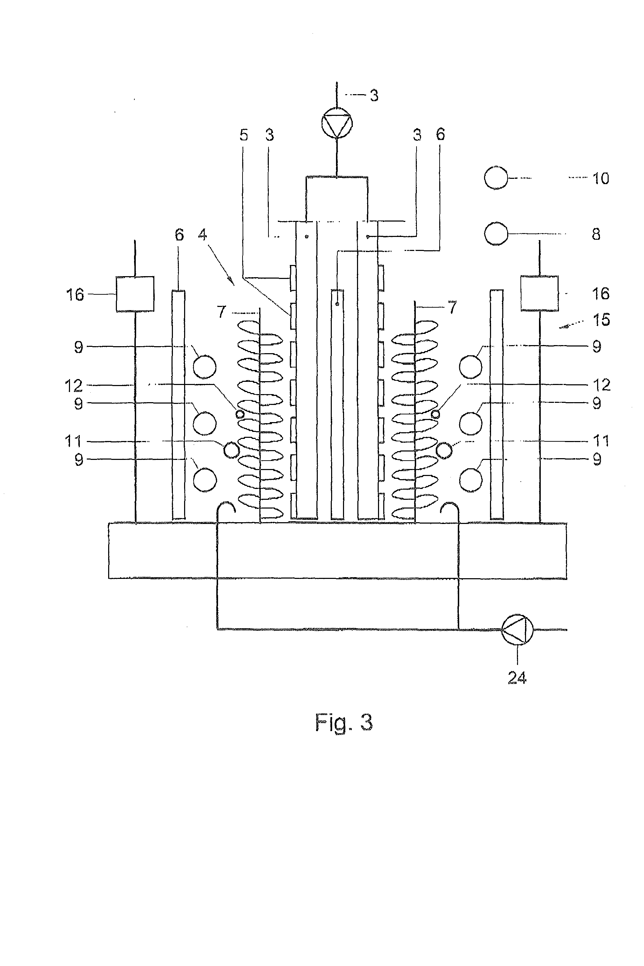

In a closed greenhouse 1 according to the invention, a heat exchanger 2 and a pump 22 for pumping air are provided, and, optionally, a pumping device 23 for supply of extra $CO_2$ to which air from the greenhouse 1 can be supplied, which air can then be supplied back into the greenhouse 1 near the crop 4 via air hoses 3 and outlet openings 5. In this manner, air movement in the greenhouse 1 can be influenced. In a greenhouse 1 according to the invention, the outlet openings 5 are preferably provided at different heights near the crop, as shown in Fig. 3, so that air can be supplied at different heights of the crop. Here, preferably, each outlet opening 5 is provided with a regulating means for regulating the amount, velocity and/or direction of the air flowing out of it. Alternatively, different outlet openings 5A, 5B, 5C may be connected to different air hoses 3, through which, for instance, air may be led at different temperatures, air humidities, flow rates and/or velocities, so that, at different heights of the crop, the climate, in particular the microclimate, can be controlled. In this manner, for instance, the microclimate near leaves of the crop can accurately be regulated and monitored. In addition, in this manner, the crop temperature can accurately be regulated and monitored. Preferably, partitions 6 or similar screening means are provided between different plants or groups of plants 7 of the crop, so that the air can be led and directed between partitions 6. Outlet openings may also have been provided at only one height and/or partitions 6 may have been omitted.

In the greenhouse 1 according to the invention, preferably, one or more $CO_2$ measuring devices 8, air temperature measuring means 9 and air humidity measuring means 10 may be provided, and for instance air movement measuring means 11 and plant temperature measuring means 12. In addition, measuring means 13 are provided for measuring the radiation by solar heat 30. These regulating means are connected to a regulating device 14 by means of which the data from the measuring means 8-13 can be processed. A watering device 15 is provided, which comprises weighing means 16 in which the crop 4 has been suspended and/or supported and by means of which the water uptake and/or transpiration of the crop and, accordingly, the growth of the crop can be monitored, and water supply means 24. Such a watering device 15 is described in detail in NL 1021856, inserted herein by reference, and is not further described.

Further, preferably, measuring means 2 for measuring wind velocity and direction are provided outside the greenhouse 1, by which means $CO_2$ leakage of the greenhouse 1 can be determined. If the greenhouse has a completely watertight design, leakage of $CO_2$ is of course virtually completely prevented. The $CO_2$ leakage can be determined from the formula:

$$C_{t+1} = C_m - (C_m - C_t)e^{(-k*t)} \qquad [1]$$

In which:

> $C_m$ = the equilibrium concentration
> $C_t$ = the $CO_2$ concentration at point in time T
> t = the period between points in time T and T+1
> k = constant, depending on the greenhouse and the wind velocity.

This relation is well known from the literature.

By means of the model as described in Heuvelink, E 1996: Tomato growth and yield quantitative analysis and synthesis, Thesis Wageningen; and Nederhoff, E.M 1994: Effects of $CO_2$ concentration on photosynthesis, transpiration and production of greenhouse vegetable crops, Thesis Wageningen, the amount of $CO_2$ to be used by the crop can be determined for optimal photosynthesis, at least for the period that it is light in the greenhouse.

On the basis of at least these data, control can take place in different manners. For instance, from a comparison between the amount of $CO_2$ supplied into the greenhouse, the amount of $CO_2$ discharged from it and the $CO_2$ leakage en the $CO_2$ concentration, it can be determined how much $CO_2$ has been taken up by the crop. If this is below the uptake for optimal photosynthesis calculated by means of the above-mentioned PPO model, an indication is obtained that the crop condition is suboptimal. This can be designated by a variable, herein called IG, to which it applies that:

$$IG = CO_2(max) - CO_2(ged) \qquad [2]$$

in which:

> $CO_2(max)$ = the amount of $CO_2$ for optimal photosynthesis calculated by means of the PPO model;
> $CO_2(ged)$ = the actual amount of $CO_2$ which has been used by the crop.

The larger IG, the poorer the crop condition, provided that, at all times, at least the amount of $CO_2$ desired for maximal photosynthesis is supplied.

Alternatively, the $CO_2$ dose can be used for regulating the photosynthesis, at least the development of the crop. This is because, if less $CO_2$ is supplied than necessary for the optimal photosynthesis, the photosynthesis will be inhibited, so that the crop growth can be controlled. Incidentally, by means of this, also, the amount of $CO_2$ needed for optimal photosynthesis can be determined. This is because, by supply of a considerable overmeasure, it can directly be calculated how much $CO_2$ is taken up by the crop, which amount corresponds to $CO_2(max)$ in healthy crop. It has been found that these values depend on *inter alia* the light intensity in the greenhouse, which is not and cannot be taken into account in existing control models. Further control and/or monitoring may then take place from this experimentally determined $CO_2(max)$.

Because, in a method according to the invention, in the greenhouse 1, the air exchange and flow of air are forced, in contrast to existing open greenhouses, stagnant layers above the leaves of the crop are simply broken, allowing still better measurement and regulation of the photosynthesis, in particular because thereby, the transpiration of the crop and the crop temperature can still better be controlled and monitored.

If the air temperature of the air flowing along the crop is chosen so as to be lower than the plant temperature, the plant loses heat to the air due to convection and the transpiration will decrease. If the air flowing along the crop has a higher temperature than the crop, the crop will, conversely, take up heat from the air and the transpiration will increase. As appears according to the invention, these effects are reinforced by promoting the mixing of the air blown into the greenhouse with the air already present in the greenhouse.

By way of illustration, it has been found for standard tomatoes that the relation between the day sum for the global radiation, that is, all radiation outside the greenhouse, of which, for instance, 80% enters the greenhouse, while the rest is, for instance, reflected and the transpiration is determined by the formula:

$$\text{Transpiration} = 0.00178 * \text{Global radiation} \qquad [3]$$

It has been found that, in contrast to a known "open" greenhouse, the transpiration in "closed" greenhouse does not drop to "0" in the absence of solar radiation. As a result of the forced air circulation in the greenhouse 1, transpiration continues to occur at night as well. The level of the , transpiration can be controlled during this period by the air circulation in the greenhouse. Thus, with otherwise constant conditions, the transpiration can be influenced by regulation of the air velocity: by decreasing the air velocity at night, the transpiration can be decreased, while, conversely, during the day, with solar radiation, when the air velocity decreases, an increase of the transpiration will occur. Without wishing to be bound to any theory, the latter appears to occur as a result of the decreased cooling which occurs at a lower air velocity.

It will be clear that the dosing of nutrients and the watering can simply be adjusted to the transpiration of the crop, as described in NL 1021856.

A plant has its own mechanism to regulate the uptake of nutrients. However, with a high transpiration and a low watering, the nutrient stock in the substrate will increase. The availability of water decreases in a substrate which is drying out and it will be more difficult for the plant to take up sufficient water. In order to compensate for this, water with a lower concentration of nutrients or without nutrients can be given.

The degree of transpiration of the plant is directly coupled to the growth of the crop. Consequently, the crop growth is hence controllable by control of the transpiration. In addition, the microclimate near the leaves of the crop is regulated and controlled in this manner, in particular if the air humidity of the air led along the crop and the air present in the greenhouse is regulated, at least measured. Accordingly, for instance, for the crop, the living conditions for insects and fungi may also be influenced. For instance, the microclimate may be made worse for insect pests and/or fungus pests, while the microclimate may be optimized for beneficial insects.

It has further been found that, by regulation of the temperature in the greenhouse 1 during a growing season, the development and, accordingly, the crop growth and the crop quality can be controlled through the season. Lowering the crop temperature results in slowing down of the photosynthesis and, accordingly, of the crop growth. Preferably, the temperature of the air in the greenhouse and of the crop is slowly lowered, so that no damage of the crop occurs. Particularly the leaf edges and similar relatively thin parts of the crop have been found to be susceptible to damage. By first lowering the air temperature in the greenhouse as a whole and only then lowering the air temperature of the air forced along the crop to below the crop temperature, the crop is protected and slowly cooled.

It has been found that, with a method according to the invention, the crop quality can be kept virtually constant for a whole season. Thus, the taste of fruits and the water content thereof can be held fairly constant, the house strength of houseplants can be improved and the sensitivity of the crop to transport conditions can be reduced. Without wishing to be bound to any theory, this seems to be the result of *inter alia* the fact that the crop and/or fruits thereof can slowly get used to conditions which can be expected for instance during transport or in living rooms. In addition, by control of the photosynthesis, product properties such as dry matter content, taste, size, color and the like can be influenced and the yield can be controlled in time.

By way of illustration, examples will follow which are by no means to be understood as being limiting.

For the growth of roses, preferably a high air humidity is used. This causes the quality of the leaves to decrease in the house phase. The leaves easily evaporate and become limp. Because air around the leaves is kept moving during the growth, the stomata stay active and the quality of the leaves will be preserved in the house phase. For tomatoes, a regimen was set in the greenhouse in which a temperature of approximately 20°C was used during the day, and approximately 18°C at night, with a relative air humidity of approximately 85%. During the day, the $CO_2$ concentration was set at 1000 ppm, with maximal light transmission. Here, an optimal growth was obtained.

The invention is by no means limited to the exemplary embodiments shown in the drawing and the description. Many variations thereof are possible within the scope of the invention set forth in the claims.

For instance, screens known per se may be provided for regulating the radiation into the greenhouse and lighting means known per se may be provided in the greenhouse for regulating the lighting regimen. The watering may be controlled in a different manner from the manner as described in NL 1021856. Also, the greenhouse may be provided with means for offering information to a grower about the variables measured in and around the greenhouse. Also, heating and cooling elements known per se may be used in a greenhouse according to the invention.

**Claims**

1. A method for growing crop, wherein the crop is arranged in a greenhouse closed off from the environment and wherein, inside the greenhouse, the climate is regulated and the watering for the crop is controlled by a watering device, and wherein at least photosynthesis and/or yield of the crop is regulated by controlling, independently of the outside conditions around the greenhouse:

   - the $CO_2$ concentration in the air in the greenhouse; and/or
   - controlling the transpiration of the crop by at least regulation of the air temperature and/or air movements around the crop.

2. A method according to claim 1, wherein, by means of the air temperature and/or the air movements, a microclimate is regulated around leaves of the crop.

3. A method according to any one of the preceding claims, wherein, on the basis of at least known leakage of $CO_2$ from the greenhouse and a measured $CO_2$ concentration in the greenhouse, the photosynthesis of the crop is determined.

4. A method according to any one of the preceding claims, wherein, periodically or continuously, the $CO_2$ concentration in the greenhouse is measured and the $CO_2$ concentration is adjusted by means of supplying extra air and/or extra $CO_2$.

5. A method according to any one of the preceding claims, wherein the air temperature in the greenhouse, at least near the crop, is regulated on the basis of at least the temperature of the crop, in particular on the basis of the temperature of leaves thereof.

6. A method according to claim 5, wherein the transpiration of the crop is regulated by means of the air temperature.

7. A method according to any one of the preceding claims, wherein the air velocity in the greenhouse, in particular near leaves of the crop, is regulated on the basis of at least the temperature of the crop, in particular of leaves thereof and/or of the temperature of the air in the greenhouse, in particular near the crop.

8. A method according to any one of the preceding claims, wherein, in the greenhouse, in particular near the crop, the air temperature and/or the air velocity is regulated at least on the basis of air humidity measured in the greenhouse and/or measured transpiration of the crop.

9. A method according to any one of the preceding claims, wherein the $CO_2$ content and the air temperature and/or the air velocity in the greenhouse, in particular near the crop, are regulated at least on the basis of the measured solar heat which is supplied into the greenhouse.

10. A method according to any one of the preceding claims, wherein the air humidity and the air temperature in the greenhouse are regulated independently of each other and independently of the $CO_2$ concentration in the greenhouse.

11. A method according to any one of the preceding claims, wherein the growth and/or the transpiration of the crop is determined, at least by weight change of the crop.

12. A method according to any one of the preceding claims, wherein, on the basis of the measured or regulated transpiration of the crop, watering by the watering device is regulated.

13. A method according to any one of the preceding claims, wherein the growth rate of the crop, in particular of fruits thereof, is adjusted by change of the air temperature in the greenhouse, in particular is inhibited by lowering the air temperature, wherein, initially, the air temperature in the greenhouse is lowered by supplying cold air at a distance from the crop and then the air temperature of the air blown along the crop in the greenhouse is lowered.

14. A method for growing crop in a greenhouse closed off from the environment thereof, wherein a regulating device is used for dosing at least the watering and control of $CO_2$ supply in the greenhouse and/or controlling evaporation by the crop in the greenhouse and/or controlling the crop temperature.

15. A method for growing crop according to claim 14, wherein an algorithm or combination of algorithms is used for controlling product quality by regulation of at least watering and at least two of the parameters evaporation, crop temperature, air temperature, air velocity and $CO_2$ concentration in the greenhouse on the basis of at least heat supply by solar heat.

16. A greenhouse for growing crop, which greenhouse is closed with respect to the environment, comprising at least a watering device, air supply means,

heating means and $CO_2$ supply means, a $CO_2$ measuring device and air temperature measuring means, wherein a regulating device is provided for regulating the $CO_2$ concentration in the greenhouse and/or the air temperature and/or the air humidity in the greenhouse on the basis of at least heat supplied to the greenhouse and/or a measured $CO_2$ concentration and/or air humidity and/or air temperature.

17. A greenhouse according to claim 16, wherein the regulating device comprises an algorithm for controlling, on the basis of measured $CO_2$ concentration, the $CO_2$ supply means and/or air supply means for controlling the $CO_2$ concentration and, accordingly, the photosynthesis of the crop in the greenhouse.

18. A greenhouse according to claim 16 or 17, wherein, near the crop, means are arranged for directing air flows along the crop, such that this allows the control of microclimate near leaves of the crop for individual plants or groups of plants.

19. A greenhouse according to any one of claims 16-18, wherein the greenhouse is substantially designed as described in WO 00/76296.

20. A greenhouse according to any one of claims 16-19, wherein, in the greenhouse, a watering device is included as described in NL 1021856.

Fig. 1

Fig. 2

Fig. 3

Fig. 4

Verloop waterverbruik op 17/07/2002

Fig. 5

EP 1 464 218 A1

EP 1 464 218 A1

**European Patent Office**

## PARTIAL EUROPEAN SEARCH REPORT

**Application Number**

which under Rule 45 of the European Patent Convention shall be considered, for the purposes of subsequent proceedings, as the European search report

EP 04 07 6032

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 299 383 A (TAKAKURA TADASHI ET AL) 5 April 1994 (1994-04-05) * the whole document * ----- | 1,2,7,8, 14,16,18 | A01G9/18 A01G9/24 |
| A,D | WO 00/76296 A (BLOK KORNELIS ; COOEPERATIEF ADVIES EN ONDERZO (NL); OPDAM JOANNES JOZ) 21 December 2000 (2000-12-21) * claims * ----- | 1,14,16 | |
| A | EP 0 517 432 A (ORMAT TURBINES) 9 December 1992 (1992-12-09) * the whole document * ----- | 1,14,16 | |
| | | | TECHNICAL FIELDS SEARCHED (Int.Cl.7) |
| | | | A01G |

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 23 June 2004 | Merckx, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

12

**European Patent Office**

**INCOMPLETE SEARCH
SHEET C**

Application Number

EP 04 07 6032

Claim(s) searched completely:
        1-18

Claim(s) not searched:
        19, 20

Reason for the limitation of the search:

Rule 29 (6) EPC

**ANNEX TO THE EUROPEAN SEARCH REPORT
ON EUROPEAN PATENT APPLICATION NO.**                EP 04 07 6032

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2004

| Patent document cited in search report | | Publication date | Patent family member(s) | | Publication date |
|---|---|---|---|---|---|
| US 5299383 | A | 05-04-1994 | JP | 3065128 A | 20-03-1991 |
| | | | GB | 2234415 A ,B | 06-02-1991 |
| | | | NL | 9001485 A | 01-03-1991 |
| | | | NO | 902624 A | 04-02-1991 |
| WO 0076296 | A | 21-12-2000 | AU | 5579400 A | 02-01-2001 |
| | | | EP | 1199922 A1 | 02-05-2002 |
| | | | WO | 0076296 A1 | 21-12-2000 |
| | | | US | 6705043 B1 | 16-03-2004 |
| EP 0517432 | A | 09-12-1992 | EP | 0517432 A1 | 09-12-1992 |
| | | | JP | 5153873 A | 22-06-1993 |

EPO FORM P0459

For more details about this annex : see Official Journal of the European Patent Office, No. 12/82